# EUROPEAN PATENT APPLICATION

(11) **EP 1 919 247 A2**
(43) Date of publication of application: **07.05.2008**
(21) Application number: 07116127.7
(22) Date of filing: 11.09.2007
(51) Int. Cl.: H04Q 7/38, H04L 29/06

(54) **System and method of communication control management**

(30) Priority: 31.10.2006 JP 2006296073
(71) Applicant: MATSUSHITA ELECTRIC INDUSTRIAL CO., LTD, Kadoma-shi, Osaka 571-8501 (JP)
(72) Inventor: Hirai, Misako c/o Matsushita Electric Industrial Co., Ltd., Chuo-ku, Osaka-shi Osaka 540-6207 (JP); Nishiki, Yoshinori c/o Matsushita Electric Industrial Co., Ltd., Chuo-ku, Osaka-shi Osaka 540-6207 (JP); Demura, Kazuya c/o Matsushita Electric Industrial Co., Ltd., Chuo-ku, Osaka-shi Osaka 540-6207 (JP)
(74) Representative: Grünecker, Kinkeldey, Stockmair & Schwanhäusser Anwaltssozietät

(57) **Abstract**

A communication control management system includes at least one communication terminal 160 and a server 260 which makes a communication mutually with the communication terminal 160. The server 260 includes a memory portion 261 for storing user authentication information, user related information relating to users and terminal operation information relating to the operation of the communication terminal 160; a data receiving portion 262 for receiving data from the communication terminal 160; a terminal status management portion 263 for managing the status of the communication terminal 160 used by a user; and a data transmission portion 264 for transmitting to the communication terminal 160 at least one of the user related information (personal information etc.) of the user authenticated by the user authentication information and the terminal operation information (display screen etc.) of the corresponding communication terminal.

## Description

### BACKGROUND OF THE INVENTION

### 1. Filed of the invention

The present invention relates to a system, method and program for communication control management which stores and manages information (including personal information) used by a user in an environment in which communication is made mutually between a communication terminal and a server.

### 2. Description of the related art

A communication terminal such as a mobile phone terminal includes a memory device in which personal information is stored. In a case where the communication terminal is lost, it is feared that the personal information may be illegally used by another person. Further, in the case of changing a currently used communication terminal to another communication terminal, it is required to copy the personal information and store it to another memory device and transfer the information the another communication terminal. Such procedures are very troublesome.

Thus, in order to solve such a problem, a system etc. are proposed in which, for example, personal information is stored in a portable type memory device (for example, a wrist watch or a finger ring) possessed by a user in advance so as not to store the personal information in a mobile phone terminal itself (see JP-A-2005-94351).

However, in the aforesaid example of the related art, in the case where the portable type memory device storing the personal information in advance is lost or left behind somewhere, it is feared that personal information may be illegally used by another person. Further, in the case of utilizing personal information such as phone book data already stored in a communication terminal by anther communication terminal, it is required to perform a procedure of transferring the personal information. Furthermore, in the case of changing a currently used communication terminal to another communication terminal, since there arises a case that a user interface (for example, the key input operation, the display format of a screen) differs at every type of communication terminals, there arises a problem in the usability.

### SUMMARY OF THE INVENTION

The invention is made in view of the aforesaid circumstances and an object of the invention is to provide a system and a method of communication control management which can prevent the illegal use of user related information such as personal information in such a case where a communication terminal is lost, can use the user related information and terminal operation information etc. among plural terminals, and can improve the security and usability.

A communication control management system according to the invention is arranged to include at least one communication terminal and a server which makes a communication mutually with the communication terminal, wherein
the communication terminal includes:
a user authentication input portion which obtains user authentication information for performing user authentication; a terminal control portion which controls the communication terminal; a data transmission portion which transmits data from the user authentication input portion and the terminal control portion to the server; and a data receiving portion which receives data from the server and transmits the data to the terminal control portion,
the server includes:
   a memory potion which stores the user authentication information, user related information relating to a user of the communication terminal and terminal operation information relating to an operation of the communication terminal; a data receiving portion which receives data from the communication terminal; a terminal status management portion which manages the status of the communication terminal used by the user; and a data transmission portion which transmits to the communication terminal at least one of the user related information of the user authenticated by the user authentication information and the terminal operation information of the corresponding communication terminal.

Thus, the user related information and the terminal operation information etc. are held in the server but not held in the communication terminal. Thus, even in such a case where a communication terminal is lost, user related information such as personal information can be prevented from being illegally used by another person. Further, the user related information and the terminal operation information can be used among a plurality of terminals. Thus, security and usability can be improved.

The invention is arranged in a manner that in the aforesaid communication control management system, the terminal status management portion of the server requests the communication terminal to be managed and obtains terminal status information representing a status of the communication terminal.

The invention is arranged in a manner that in the aforesaid communication control management system, the terminal status management portion of the server compares user authentication information received from the communication terminal with the compares user authentication information stored in the memory portion, then determines to be completion of authentication only when these information coincide to each other and reads and outputs at least one of the user related information and the terminal operation information.

The invention is arranged in a manner that in the aforesaid communication control management system, the server further includes an analysis portion which analyzes data received from the communication terminal and extracts at least one of the user authentication information and the terminal status information.

The invention is arranged in a manner that in the aforesaid communication control management system, when the data analyzed by the analysis portion is the terminal status information, the terminal status management portion of the server stores the data into the memory portion as the terminal status information representing a status of the corresponding communication terminal.

The invention is arranged in a manner that in the aforesaid communication control management system, the memory portion of the server stores a plurality of the user authentication information, a plurality of the user related information and a plurality of the terminal operation information corresponding to a plurality of users, respectively, and further stores the terminal status information corresponding to the communication terminals used by a plurality of the users and updates the terminal status information in a time division manner.

The invention is arranged in a manner that in the aforesaid communication control management system, the terminal status management portion of the server can manage a plurality of the communication terminals used by a single user, and when the same user makes a communication with the server from a plurality of the communication terminals thereby to perform the user authentication, the terminal status management portion transmits the same user related information and different terminal operation information to the plurality of the communication terminals.

The invention is arranged in a manner that in the aforesaid communication control management system, when the user authentication information is received from a plurality of the communication terminals, the terminal status management portion of the server inquires, at a time of the user authentication as to a second or succeeding communication terminal, the second or succeeding communication terminal as to whether or not the authentication of the communication terminal having been successful in the user authentication is to be cancelled.

The invention is arranged in a manner that in the aforesaid communication control management system, when the user authentication information is received from a plurality of the communication terminals and these user authentication information coincide to each other, the terminal status management portion of the server reads from the memory portion the terminal operation information corresponding to the communication terminal used lastly by the user and transmits the terminal operation information thus read to another communication terminal of the plurality of the communication terminals having been successful in the user authentication.

The invention is arranged in a manner that in the aforesaid communication control management system, the memory portion of the server can store and register at least one user authentication information as the user authentication information.

The invention is arranged in a manner that in the aforesaid communication control management system, when a plurality of the user authentication information coincide with the user authentication information corresponding to a single user, the terminal status management portion of the server authenticates the user.

The invention is arranged in a manner that in the aforesaid communication control management system, the terminal status management portion of the server selects data including at least one of the user related information and the terminal operation information necessary for a corresponding user based on the terminal status information transmitted from the communication terminal and the terminal status information of the communication terminal stored in the memory portion and transmits the selected data to the communication terminal via the transmission portion.

The invention is arranged in a manner that in the aforesaid communication control management system, the terminal status management portion of the server performs the user authentication based on the user authentication information transmitted from the communication terminal and the user authentication information stored in the memory portion and selects data including at least one of the user related information and the terminal operation information necessary for a corresponding user and transmits the selected data to the communication terminal via the transmission portion.

The invention is arranged in a manner that in the aforesaid communication control management system, the communication terminal further includes an input portion which inputs terminal control from a user, and transmits the terminal status information based on the terminal control input to the server.

The invention is arranged in a manner that in the aforesaid communication control management system,
the communication terminal further includes an input portion which inputs terminal control from a user and an output portion which outputs based on the terminal operation information received from the server, when the communication terminal transmits the terminal status information based on the input from the user to the server,
the terminal status management portion of the server stores a current status of the communication terminal based on the transmitted terminal status information into the memory portion, then reads the terminal status information corresponding to the input from the memory portion and transmits the read terminal status information to the communication terminal.

The invention is arranged in a manner that in the aforesaid communication control management system, the communication terminal further includes a memory portion which stores the user authentication information obtained by the user authentication input portion, and transmits data including the terminal status information representing a status of the communication terminal and the user authentication information to the server.

The invention is arranged in a manner that in the aforesaid communication control management system, the communication terminal transmits data including the terminal identification information for identifying the communication terminal, the terminal status information representing a status of the communication terminal and the user authentication information to the server.

The invention provides a communication terminal used in one of the communication control management systems described above.

The invention provides a server used in one of the communication control management systems described above.

A communication control management method according to the invention is arranged in a manner that in a communication control management system including at least one communication terminal and a server which makes a communication mutually with the communication terminal, wherein
steps executed in the communication terminal includes:
a step of obtaining, at a user authentication input portion, user authentication information for performing user authentication; a step of obtaining, at a terminal control portion, terminal status information representing a status of the communication terminal; a step of transmitting, from a data transmission portion, data including the user authentication information and the terminal state information to the server; and a step of receiving the data from the server at a data receiving portion and transmitting the data to the terminal control portion, and wherein steps executed in the server includes:
   a step of holding in a memory potion the user authentication information, user related information relating to a user of the communication terminal and terminal operation information relating to an operation of the communication terminal; a step of receiving at a data receiving portion data from the communication terminal; a step of managing at a terminal status management portion the status of the communication terminal used by the user; and a step of transmitting from a data transmission portion to the communication terminal at least one of the user related information of the user authenticated by the user authentication information and the terminal operation information of the corresponding communication terminal.

The invention provides a program executed in one of the communication control management systems described above and also provides a program for realizing functions of respective portions of the communication control management system.

According to the aforesaid configuration, the user related information and the terminal operation information etc. are held in the server but not held in the communication terminal. Thus, a user is not required to store the user related information such as personal information in the communication terminal. Therefore, , even if the communication terminal is lost or left behind somewhere, it is possible to prevent such a matter that the personal information etc. is illegally used by another person and so the security can be improved. Further, since a user uses a communication terminal which can be mutually communicated with the server, the user related information stored in the memory portion of the server can be used as it is. Thus, even in the case where the terminal is changed by another one, there does not arise such a procedure of shifting the information etc. from the current terminal to the another one and so the usability can be improved. Further, since a user can use desired terminal operation information such as a user interface having a menu screen desired by the user held in the memory portion of the server, even in the case where the terminal is changed by another one, the same user interface can be used in the another one and so the usability can be improved.

According to the invention, it is possible to provide a system and a method of communication control management which can prevent the illegal use of user related information such as personal information in such a case where a communication terminal is lost, can use the user related information and terminal operation information etc. among plural terminals, and can improve the security and usability.

### BREIF DESCRIPTION OF THE DRAWINGS

Fig. 1 is a block diagram showing the schematic configuration of the communication control management system according to an embodiment.
Fig. 2 is a block diagram showing the schematic configuration of the communication control management system according to the first embodiment of the invention.
Fig. 3 is a block diagram showing the main configuration of a mobile phone terminal and a server constituting the communication control management system according to the first embodiment
Fig. 4 is a block diagram showing the schematic configuration of the communication control management system according to the second embodiment of the invention.
Fig. 5 is a sequence diagram showing the authentication information registration processing of the communication control management system according to the second embodiment.
Fig. 6 is a sequence diagram showing the updating of a display screen and the updating processing of a disc driver in the communication control management system according to the second embodiment.

### DESCRIPTION OF THE PREFERRED EMBODIMENTS

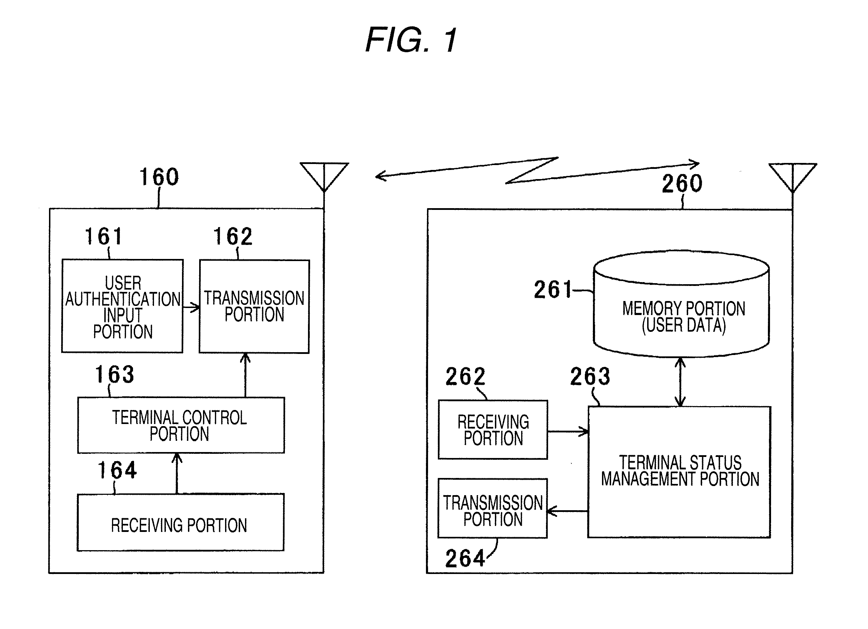

First, the summary of the communication control management system according to an embodiment will be explained. Fig. 1 is a block diagram showing the schematic configuration of the communication control management system according to the embodiment.

The communication control management system is configured by at least one communication terminal 160 and a server 260 for making mutual communication with the communication terminal 160. The communication terminal 160 includes a user authentication input portion 161 for obtaining user authentication information for performing user authentication; a terminal control portion 163 for controlling the communication terminal; a transmission portion 162 for transmitting terminal identification information for identifying the communication terminal and terminal status information relating to the status of the communication terminal as well as the user authentication information to the server 260 as data from the user authentication input portion 161 and the terminal control portion 163; and a receiving portion 164 for receiving data from the server 260 and inputting into the terminal control portion 163.

The server 260 includes a memory portion 261 for storing user data such as user related information relating to users such as the user authentication information and personal information, the terminal identification information and terminal operation information relating to the operation of the communication terminal such as a display screen; a receiving portion 262 for receiving data from the communication terminal 160; a terminal status management portion 263 for managing the status of the communication terminal 160 used by a user; and a transmission portion 264 for transmitting the user related information of an authenticated user and the terminal operation information of the communication terminal 160 etc. to the communication terminal 160.

In this configuration, the server 260 obtains the user authentication information and the terminal identification information sent from the communication terminal 160 and collates the obtained information with the user authentication information stored in advance in the memory portion 261 to perform the authentication. The server 260 manages the user related information corresponding to the respective users (for example, the personal information (contract information, telephone-book data etc.) and the terminal operation information corresponding to the users and the communication terminal (for example, information such as a menu screen, an operation screen, an operation sound and a device driver set by a user). When the authentication is completed normally or successful, the server transmits, as the need arises to the communication terminal 160, the user related information corresponding to the authenticated user and the terminal operation information corresponding to the user and the communication terminal. Thus, the communication terminal 160 can use the user related information and the terminal operation information etc. sent from the server 260, and so the user can use the telephone book and the operation screen adapted to the user at the authenticated communication terminal 160.

In this embodiment, since the communication terminal does not hold the user related information etc., even if the communication terminal is lost, it can be prevented that the personal information is leaked or illegally used by another person. Further, since the authenticated user can use the user related information and the terminal operation information at another communication terminal, the same usability can be maintained even in the case where the terminal is changed by another one. Thus, the security and the usability can be improved.

### (First embodiment)

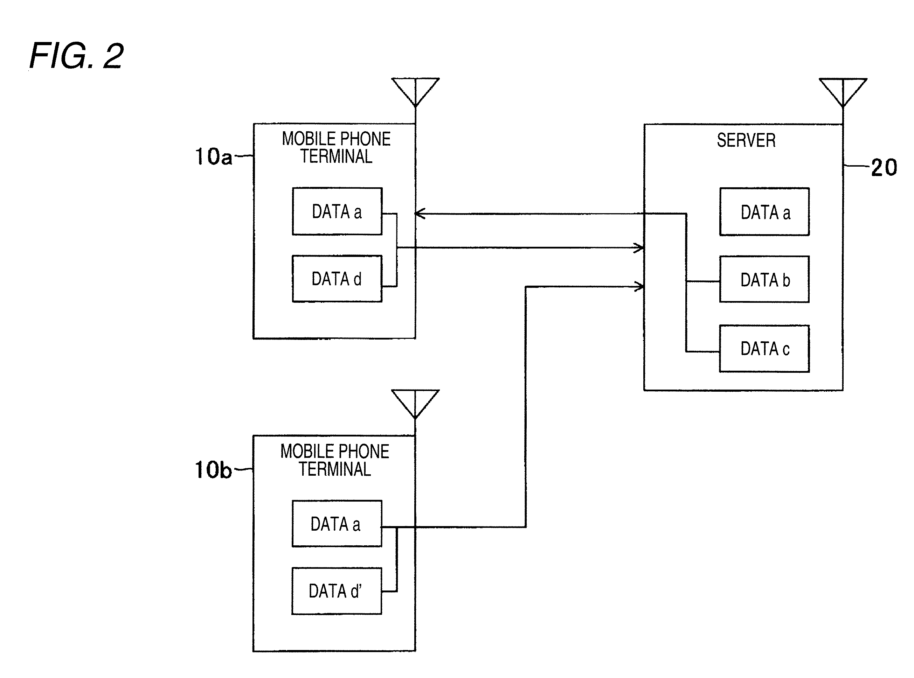

Fig. 2 is a block diagram showing the schematic configuration of the communication control management system according to the first embodiment of the invention. The communication control management system according to the embodiment is configured to include a plurality of mobile phone terminals 10a, 10b as the communication terminals and a server 20 for making mutual communication with the mobile phone terminals. In Fig. 2, although only two the mobile phone terminals are shown, the number of the mobile phone terminals may be one or three or more.

Each of the mobile phone terminals 10a, 10b has a function of obtaining data a corresponding to the user authentication information (biometric information etc.), a function of controlling the mobile phone terminal itself and a function of making data transmission and reception with the server 20. The server 20 stores the data a, data b corresponding to the personal information of the user (telephone book data etc.) as an example of the user related information and data c corresponding to the terminal operation information (for example, the display screen data of the operation screen (graphic data) etc.) related to the operation of the mobile phone terminal. The server has a function of ,managing the status of the mobile phone terminal and a function of making data transmission and reception with the mobile phone terminals 10a, 10b.

The server 20 is coupled to each of the mobile phone terminals 10a, 10b so as to communicate via the radio wave or a wire. Each of the mobile phone terminals 10a, 10b transmits the data a to the server 20 and receives the data b or the data c from the server 20 thereby to make it possible to control the mobile phone terminal itself.

In the communication control management system according to the embodiment, the mobile phone terminal 10a stores the data a (use authentication information) and data d which is the terminal identification information as peculiar information capable of discriminating the mobile phone terminal. The server 20 stores the data a (user identification information), the data b (user related information) and the data c (terminal operation information). The mobile phone terminal 10a is coupled to the server 20 via a communication interface using the radio wave or a wire, then the mobile phone terminal 10a transmits the data a and the data d to the server 20, and the transmitted data is compared with the data a on the server 20. When it is confirmed that the data a of the mobile phone terminal 10a coincides with the data a on the server 20, the user can obtain and use the data b and the data c stored in the server 20.

As to the another mobile phone terminal 10b, the data a (user identification information) and the data d' (terminal identification information) are also stored therein, and the server 20 stores the data a, the data b and the data c. The mobile phone terminal 10b is coupled to the server 20 via a communication interface using the radio wave or a wire, then the mobile phone terminal 10b transmits the data a and the data d' to the server 20, and the transmitted data is compared with the data a on the server 20. When it is confirmed that the data a of the mobile phone terminal 10b coincides with the data a on the server 20, the user can obtain and use the data b and the data c stored in the server 20.

The obtaining of the data b and the data c from the server 20 by the mobile phone terminal 10b can be performed simultaneously with the obtaining of the data b and the data c from the server 20 by the mobile phone terminal 10a. The respective data a obtained by the mobile phone terminals 10a and 10b may be partially or entirely same.

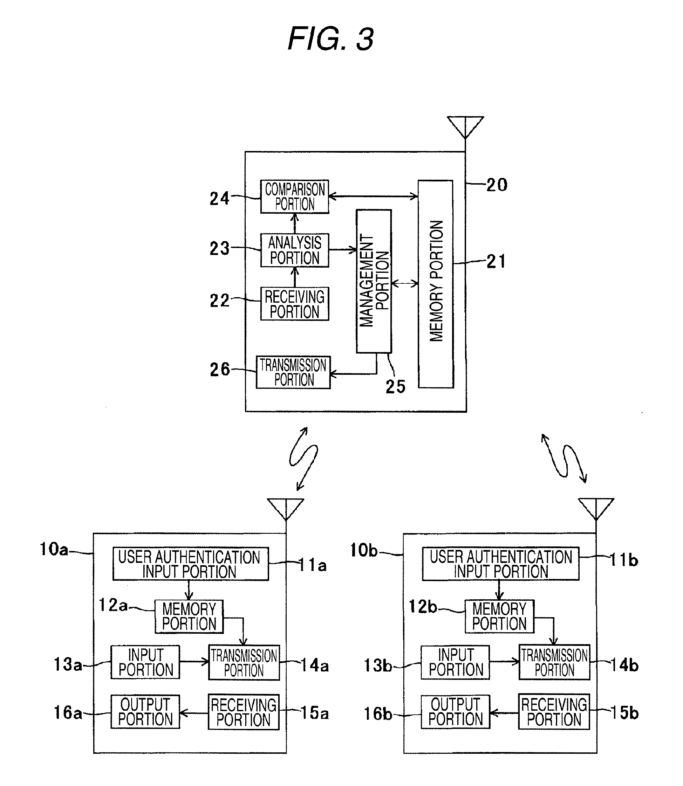

Fig. 3 is a block diagram showing the main configuration of the mobile phone terminal and the server constituting the communication control management system according to the first embodiment shown in Fig. 2.

The main portion of the mobile phone terminal 10a is configured to include a user authentication input portion 11 a for obtaining the data a which is the user authentication information such as the biometric information capable of specifying a person; a memory portion 12a for storing the data d which is the obtained user authentication information and the terminal identification information as the peculiar information capable of discriminating the mobile phone terminal; an input portion 13a for obtaining data e which is the terminal status information given by a user via a key input etc. to the mobile phone terminal 10a; a transmission portion 14a for transmitting to the server 20 the data a, the data d and the data e as transmission data f which is single data or a combined data of two or more data; a receiving portion 15a for obtaining the data b (user related information) and the data c (terminal operation information) transmitted from the server 20; and an output portion 16a for outputting the data c received from the server 20 to perform the displaying etc. As the output portion 16a, one of a display portion such as a liquid crystal display panel, a sound output portion such as a speaker or a buzzer and a vibration portion such as a vibrator etc.

The main portion of the server 20 is configured to include a portion 21 for storing the data b (user related information) and the data c (terminal operation information); a receiving portion 22 for receiving the data f transmitted from the mobile phone terminal 10a; an analysis portion 23 for analyzing the received data f to extract the data a, the data d and the data e from the received data; a comparison portion 24 for comparing the obtained data a with the own data a stored in the portion 21; a management portion 25 for taking out from the portion 21 the data b and the data c to be transferred to the mobile phone terminal 10a; and a transmission portion 26 for transmitting the data b and the data c transferred from the management portion 25 to the mobile phone terminal 10a.

As the terminal status information, there is used information such as a state of the display screen of the menu screen etc. of the communication terminal, an operation state during the starting or communication etc., a state of the operation instruction of the terminal such as the key operation and the terminal control, and a state of the various kinds of the communication terminals such as the kinds of hardware and device drivers mounted on the communication terminals.

Further, each of the mobile phone terminals 10a, 10b is arranged to be able to cut off the communication with the server 20. Furthermore, each of the mobile phone terminals 10a, 10b is arranged to be able to cut off the communication between the server 20 and another communication terminal succeeded in the user authentication. Furthermore, the mobile phone terminals 10a, 10b are arranged to be able to transmit the terminal status information to the server 20 each time the terminal control is inputted based on the terminal control input from the input portions 13a, 13b due to the key operation etc. by a user, respectively.

Hereinafter, the operation of the communication control management system according to the first embodiment will be explained.

### (1) Authentication setting and cancellation thereof

At the time of using the mobile phone terminal 10a, a user performs the authentication setting relating to the terminal. In the authentication setting, the user performs the input operation for the authentication setting via the user authentication input portion 11 a. In response to the input operation, the mobile phone terminal 10a stores in the memory portion 12a the data a which is the obtained user authentication information, and transmits the data a and the data d which is the terminal identification information peculiar to the terminal stored in advance in the memory portion 12a.

In the server 20, the receiving portion 22 receives the data from the mobile phone terminal 10a and the analysis portion 23 extracts and analyzes the data a and the data d to identify a user and a mobile phone terminal form these data. Then, the comparison portion 24 compares the data a which is the user authentication information stored in advance in the portion 21 with the data a obtained from the analysis portion 23. Only when these data a coincide to each other, the management portion 25 extracts the data c which is the output data (terminal operation information) for notifying the normal termination of the authentication setting stored in the portion 21 and the extracted data is transmitted from the transmission portion 26 to the mobile phone terminal 10a. Hereinafter, it becomes possible to utilize the data b which is the user related information such as the personal information and the data c which is the terminal operation information stored in the portion 21 of the server 20. In the mobile phone terminal 10a, the output portion 16a outputs the data c which is the output data for notifying the normal termination of the authentication setting received at the receiving portion 15a to display characters or images etc. on the display portion or output sound etc. from the sound output portion. Thus, the authentication setting operation is completed.

In the case of canceling the authentication setting, a user performs the input operation for canceling the authentication setting by the user authentication input portion 11a. In response to the input operation, the mobile phone terminal 10a transmits the data a which is the user authentication information stored in the memory portion 12a and the data d which is the terminal identification information peculiar to the terminal stored in advance in the memory portion 12a to the server 20 from the transmission portion 14a.

In the server 20, the receiving portion 22 receives the data form the mobile phone terminal 10a, and the analysis portion 23 extracts and analyzes the data a and the data d to specify the user and the mobile phone terminal from these data. When the specified used and the mobile phone terminal are already authenticated, the management portion 25 takes out from the portion 21 the data c which is the output data (terminal operation information) for confirming the cancellation of the authentication setting stored in the portion 21 in advance and transmits the data thus taken out to the mobile phone terminal 10a from the transmission portion 26.

In response thereto, in the mobile phone terminal 10a, the output portion 16a outputs the data c which is the output data for confirming the cancellation of the authentication setting received at the receiving portion 15a to display the characters or images etc. on the display portion thereby to request the user to input the confirmation of the cancellation of the authentication setting. In the mobile phone terminal 10a, when the user inputs the cancellation from the input portion 13a in response to the request, the transmission portion 14a transmits the data e which is the terminal status information of the cancellation input together with the data a and the data d to the server 20 based on the input operation.

In the server 20, the receiving portion 22 receives the data from the mobile phone terminal 10a and the analysis portion 23 extracts and analyzes the data a, the data d and the data e. Based on these data, the management portion 25 takes out from the portion 21 the data c which is the output data (terminal operation information) for notifying the normal completion of the cancellation of the authentication setting representing that the cancellation is made normally and the transmission portion 26 transmits the data to the mobile phone terminal 10a. Then, in the mobile phone terminal 10a, the output portion 16a outputs the data c which is the output data for notifying the normal completion of the cancellation of the authentication setting received at the management portion 25 to display characters or images etc. on the display portion or output sound etc. from the sound output portion. Thus, the cancellation processing of the authentication setting is completed.

### (2) Use of the mobile phone terminal

When the user inputs the terminal status information such as the key input from the input portion 13a, in the mobile phone terminal 10a, the transmission portion 14a transmits to the server 20 the data f which is a combined single transmission data of the data e which is the obtained terminal status information, the data a which is the user authentication data stored in the memory portion 12a and the data d which is the terminal identification information peculiar to the terminal.

In the server 20, the receiving portion 22 receives the data f from the mobile phone terminal 10a and the analysis portion 23 extracts and analyzes the data a, the data c and the data d. Then, the comparator 24 compares the data a which is the user authentication information stored in the portion 21 in advance with the data a obtained from the analysis portion 23. Only when these data a coincide to each other, the management portion 25 stores the current terminal status into the portion 21 based on the data e which is the terminal status information received from the mobile phone terminal 10a, then takes out the data c which is the output data (terminal operation data) corresponding to the input from the portion 21, and transmits the data thus taken out to the mobile phone terminal 10a from the transmission portion 26. In the mobile phone terminal 10a, the output portion 16a outputs the data c which is the output data received at the receiving portion 15a to display characters or images etc. on the display portion or output sound etc. from the sound output portion.

In the aforesaid communication control management system according to the embodiment, the data of the information relating to a user, contents data to be stored, the output data used for the operation output of the terminal etc. (that is, the user related information and the terminal operation information etc.) such as contractor information, telephone book data, mail data, still image data, moving image data, graphic data such as a menu screen or an operation screen, sound data such as an incoming call signal, sound data, application data such as a game written in a memory card such as a SIM card is not stored in the mobile phone terminal 10a but in the server 20. Thus, the memory capacity of the mobile phone terminal can be made small by an amount necessary for storing these data.

Further, since the personal information is not stored in the mobile phone terminal itself, even in a case where the communication terminal is lost or left behind somewhere, there is no fear that the personal information may be illegally used by another person. Further, when a user does not keep the mobile phone terminal usually used at hand, the user can obtain the personal information and the display graphic data etc. from the server 20 by using an alternative terminal. Furthermore, since the output data corresponding to the input from the mobile phone terminal is received from the server 20 and utilized, the operability similar to the terminal used by the user can be maintained even in a case where an alternative terminal is used or a mobile phone terminal is changed by another one due to the new contract or the change of the terminal type.

### (3) In the case of using a plurality of mobile phone terminals by a single user (3-a) Authentication setting and the cancellation thereof

In the case where the first mobile phone terminal 10a already accesses the server 20 and the user authentication from the mobile phone terminal 10a is completed, when the second mobile phone terminal 10b is started to be used, the mobile phone terminal 10b accesses the server 20 to perform the authentication setting relating to this terminal. In this authentication setting, a user performs the input operation for the authentication setting at the user authentication input portion 11 b. According to the input operation, in the mobile phone terminal 10b, the data a which is the obtained user authentication information is stored in the memory portion 12b, and the data d' which is the terminal identification information peculiar to the terminal stored in advance in the memory portion 12b is transmitted together with this data a to the server 20 from the transmission portion 14b.

In the server 20, the receiving portion 22 receives the data from the mobile phone terminal 10b, and the analysis portion 23 extracts and analyzes the data a and the data d' to discriminate the user and the mobile phone terminal based on the analyzed data. Then, the comparison portion 24 compares the data a which is the user authentication information stored in advance in the portion 21 with the data a obtained from the analysis portion 23. When these data a coincide to each other, a user is specified from the data a. When the management portion 25 confirms that the specified use is already authenticated by the another mobile phone terminal 10a, the management portion takes out from the portion 21 the data c which is the output data (terminal operation information) for confirming the cancellation of the authentication setting as to the mobile phone terminal 10a stored in the portion 21 and transmits the data thus taken out to the mobile phone terminal 10b from the transmission portion 26.

In response thereto, in the mobile phone terminal 10b, the output portion 16b outputs the data c which is the output data for confirming the cancellation of the authentication setting as to the another mobile phone terminal 10a received at the receiving portion 15b to display the characters or images etc. on the display portion thereby to request the user to input the confirmation of the cancellation of the authentication setting. In the mobile phone terminal 10b, when the user inputs the non-cancellation from the input portion 13b in response to the request so as to use both the terminals, the transmission portion 14b transmits to the server 20 the data f which is a combined single transmission data of the data e which is the terminal status information of the non-cancellation input together with the data a and the data d based on the input operation.

In the server 20, the receiving portion 22 receives the data f from the mobile phone terminal 10b and the analysis portion 23 extracts and analyzes the data a, the data d and the data e. Based on these data, the management portion 25 takes out from the portion 21 the data c which is the output data (terminal operation information) for notifying the normal completion of the authentication setting and data c' which is the final output data (terminal operation information) transmitted to the first mobile phone terminal 10a, and the transmission portion 26 transmits these taken-out data to the mobile phone terminal 10b. Further, simultaneously, the management portion 25 obtains from the portion 21 data c" which is the output data (terminal operation information) for notifying the authentication setting representing that the authentication setting as to the second mobile phone terminal 10b is performed normally and the transmission portion 26 transmits this obtained data to the mobile phone terminal 10a

In response thereto, in the mobile phone terminal 10b, the output portion 16b outputs the data c which is the output data for notifying the normal completion of the authentication setting and the data c' which is the final output data transmitted to the another mobile phone terminal 10a each received at the receiving portion 15b thereby to display characters or images etc. on the display portion or output sound etc. from the sound output portion. Thus, the authentication setting operation is completed. Further, simultaneously, in the mobile phone terminal 10a, the output portion 16a outputs the data c" which is the output data for notifying the authentication setting as to the second mobile phone terminal 10b received at the receiving portion 15a thereby to display characters or images etc. on the display portion or output sound etc. from the sound output portion. Hereinafter, it becomes possible for a single user to perform the communications etc. by using the plurality of mobile phone terminals 10a and 10b.

When a user performs the cancellation input via the input portion 13b at the time of inputting the confirmation of the cancellation of the authentication setting as to the another mobile phone terminal 10a, in the mobile phone terminal 10b, the transmission portion 14b transmits to the server 20 the data f which is a combined single transmission data of the data e which is the terminal status information of the cancellation input together with the data a and the data d based on the input operation.

In the server 20, the receiving portion 22 receives the data f from the mobile phone terminal 10b and the analysis portion 23 extracts and analyzes the data a, the data d and the data e. Based on these data, the management portion 25 takes out from the portion 21 the data c which is the output data (terminal operation information) for notifying the normal completion of the cancellation of the authentication setting representing that the cancellation is made normally, and the transmission portion 26 transmits the taken-out data to the mobile phone terminals 10a and 10b. Then, in the mobile phone terminals 10a and 10b, the output portions 16a and 16b output the data c which is the output data for notifying the normal completion of the cancellation of the authentication setting received at the receiving portions 15a and 15b thereby to display characters or images etc. on the display portion or output sound etc. from the sound output portion, respectively. Thus, the cancellation operation of the authentication setting as to the another mobile phone terminal 10a is completed.

### (3-b) Simultaneous use of a plurality of mobile phone terminals

In the case where a single user simultaneously uses two or more mobile phone terminals, after each of the mobile phone terminals 10a and 10b accesses the server 20 to perform the aforesaid authentication setting, it is possible to perform different operations at the respective mobile phone terminals.

When a user inputs the terminal status information such as the key input from the input portion 13a, in the mobile phone terminal 10a, the transmission portion 14a transmits to the server 20 the data f which is a combined single transmission data of the data e which is the obtained terminal status information, the data a which is the user authentication data stored in the memory portion 12a and the data d which is the terminal identification information peculiar to the terminal.

In the server 20, the receiving portion 22 receives the data f from the mobile phone terminal 10a and the analysis portion 23 extracts and analyzes the data a, the data c and the data d. Then, the comparator 24 compares the data a which is the user authentication information stored in the portion 21 in advance with the data a obtained from the analysis portion 23. Only when these data a coincide to each other, the management portion 25 stores the current terminal status into the portion 21 based on the data e which is the terminal status information and the data d which is the terminal identification information received from the mobile phone terminal 10a, then takes out the data c which is the output data (terminal operation data) corresponding to the input from the portion 21, and transmits the data thus taken out to the mobile phone terminal 10a from the transmission portion 26. In the mobile phone terminal 10a, the output portion 16a outputs the data c which is the output data received at the receiving portion 15a to display characters or images etc. on the display portion or output sound etc. from the sound output portion

The second or succeeding mobile phone terminal 10b also operates in the similar manner as the mobile phone terminal 10a. In the communication control management system according to the embodiment, the mobile phone terminals 10a and 10b send the data d and the data d' which are the terminal identification information peculiar to the terminals for discriminating the terminals to the server 20, respectively. The server 20 manages the statuses of the respective terminals by using the data d and the data d', respectively. For example, the information such as map information is obtained via the network such as an internet and displayed on the first mobile phone terminal 10a, and telephone communication or transmission/reception of a mail can be performed via the second mobile phone terminal 10b while referring to the displayed information.

In the aforesaid embodiment, the functions of the respective portions of each of the mobile phone terminals 10a, 10b and the server 20 can be realized basically in a manner that a computer having a processor and a memory etc. executes a program to perform the processings of the aforesaid (1) authentication setting and cancellation thereof, (2) use of the mobile phone terminal and (3) in the case of using a plurality of mobile phone terminals by a single user.

### (Second embodiment)

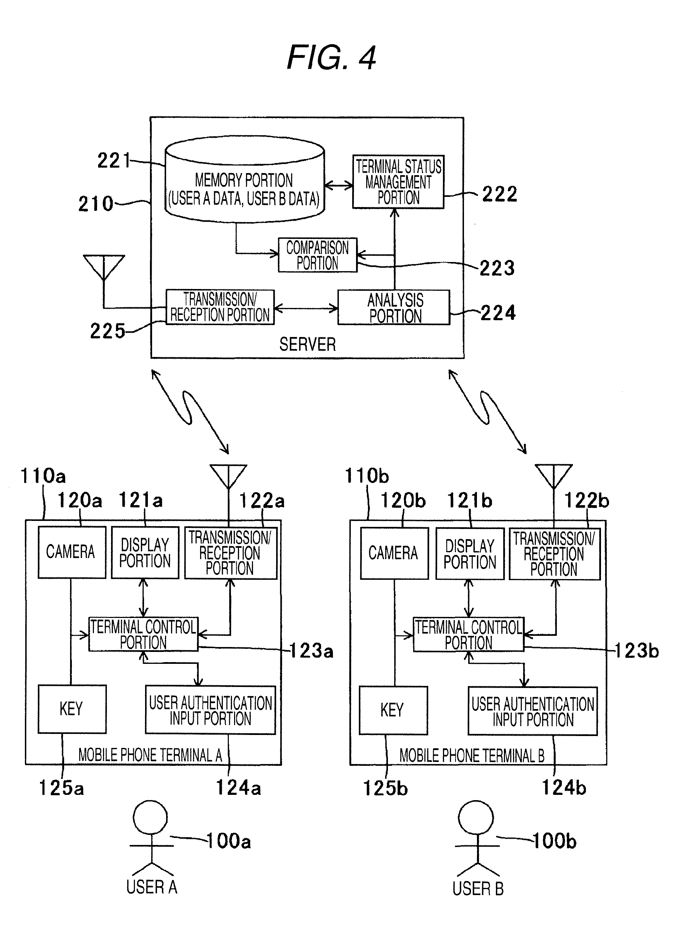

Fig. 4 is a block diagram showing the schematic configuration of the communication control management system according to the second embodiment of the invention. The communication control management system according to the embodiment is configured to include a mobile phone terminal A110a possessed by a user A100a and a mobile phone terminal B110b possessed by a user B100b as mobile phone terminals which are communication terminals possessed by a plurality of users and a server 210 configured to be able to make mutual communication with these mobile phone terminals. In Fig. 4, although only two the mobile phone terminals are shown, the number of the mobile phone terminals may be one or three or more.

The mobile phone terminal A110a and the mobile phone terminal B110b include transmission/reception portions 122a, 122b, terminal control portions 123a, 123b, user authentication input portions 124a, 124b, display portions 121a, 121b, cameras 120a, 120b and keys 125a, 125b, respectively. The user authentication input portions 124a, 124b each for obtaining the user authentication information (biometric information etc.) are coupled to the terminal control portions 123a, 123b each for controlling the terminal and further coupled to the transmission/reception portions 122a, 122b each for communicating with the outside via the terminal control portions 123a, 123b, respectively. The terminal control portions 123a, 123b are coupled to the cameras 120a, 120b each for photographing a subject such as the iris of a user, the keys 125a, 125b each for performing the operation input, and the display portions 121a, 121b each for displaying the operation state etc., respectively.

The server 210 includes a memory portion 221, a terminal status management portion 222, a comparison portion 223, an analysis portion 224 and a transmission/reception portion 225. The server 210 is coupled to each of the mobile phone terminal A110a and the mobile phone terminal B110b via a communication interface using the radio wave or a wire. The mobile phone terminal A110a and the mobile phone terminal B110b are configured to transmit and receive data with respect to the transmission/reception portion 225 of the server 210 via the transmission/reception portions 122a, 122b, respectively. The transmission/reception portion 225 is coupled to the analysis portion 224 for analyzing received data. The analysis portion 224 is coupled to the comparison portion 223 for comparing data and the terminal status management portion 222 for managing the terminal status. Each of the terminal status management portion 222 and the comparison portion 223 is coupled to the memory portion 221 for storing user data such as user authentication information, user related information, terminal identification information and terminal operation information so that data relating to plural users can be stored and managed.

Each of the mobile phone terminals A110a, B110b is arranged to be able to cut off the communication with the server 210. Further, each of the mobile phone terminals A110a, B110b is arranged to be able to cut off the communication between the server 210 and another communication terminal succeeded in the user authentication. Furthermore, the mobile phone terminals A110a, B110b are arranged to be able to transmit the terminal status information to the server 210 each time the terminal control is inputted based on the terminal control input from the keys 125a, 125b due to the key operation etc. by a user, respectively.

Hereinafter, the operation of the communication control management system according to the second embodiment thus configured will be explained.

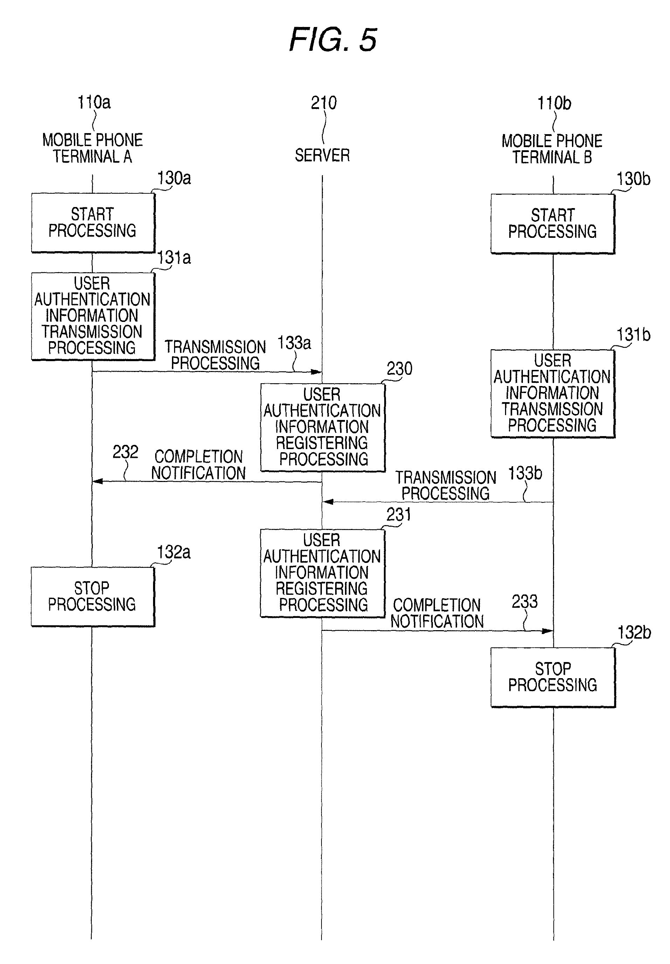

Fig. 5 is a sequence diagram showing the authentication information registration processing of the communication control management system according to the second embodiment. In Fig. 5, each of the mobile phone terminals A110a, B110b is coupled to the server 210 via a communication interface using the radio wave or a wire. Fig. 5 shows the procedure of registering in the server 210 the user authentication information (biometric information etc.) obtained at the mobile phone terminals A110a, B110b.

### (1) Registration of authentication information

First, the explanation will be made as to the registration processing of the user authentication by the mobile phone terminal A110a which is possessed and used by the user A100a with reference to Fig. 4.

In the mobile phone terminal A110a, when the user A100a inputs a plurality of the user authentication information such as the password, finger mark, voice pattern, iris of the user A100a via the camera 120a and the key 125a, the user authentication input portion 124a obtains the user authentication information thereof. The terminal control portion 123a determines that this information is the user authentication information to be registered in the server 210, then adds data representing the registration of the user authentication information thereto and transmits to the server 210 via the transmission/reception portion 122a.

In the server 210, the transmission/reception portion 225 receives data from the mobile phone terminal A110a and the analysis portion 224 analyzes the data of the user authentication information. When the analysis portion 224 determines that the user authentication information is information to be registered in the server 210, the terminal status management portion 222 stores in the memory portion 221 the user authentication information such as the password, finger mark, voice pattern, iris of the user A100a as the data of the user A100a. When the storing of the user authentication information is completed, the terminal status management portion 222 transmits notification data to the mobile phone terminal A110a via the analysis portion 224 and the transmission/reception portion 225 to notify the completion of the registration to the mobile phone terminal A110a.

Then, the procedure of the authentication information registration processing will be explained with reference to Fig. 5. In the mobile phone terminal A110a, first, the terminal control portion 123a performs a start processing 130a in which the user authentication input portion 124a obtains the user authentication information such as the password, finger mark, voice pattern, iris of the user A100a. Then, the terminal control portion 123a executes a user authentication information transmission processing 131 a in which the transmission/reception portion 122a performs the transmission processing 133a of the user authentication information

In the server 210, the analysis portion 224 analyzes the user authentication information obtained at the transmission/reception portion 225 to determine that the obtained information is the authentication information to be registered in the server 210 and the terminal status management portion 222 executes a user authentication information registering processing 230 in which the user authentication information is registered. Then, after the completion of the registering processing, the terminal status management portion 222 transmits notifying data to the mobile phone terminal A110a from the transmission/reception portion 225 to perform a completion notification 232. Then, in the mobile phone terminal A110a, the terminal control portion 123a performs a stop processing 132a to complete the registering processing of the user authentication information.

Next, the explanation will be made as to the registration processing of the user authentication by the mobile phone terminal B110b which is possessed and used by the user B100b with reference to Fig. 4.

In the mobile phone terminal B110b, when the user B100b inputs a plurality of the user authentication information such as the password, finger mark, voice pattern, iris of the user B100b via the camera 120b and the key 125b, the user authentication input portion 124b obtains the user authentication information thereof. The terminal control portion 123b determines that this information is the user authentication information to be registered in the server 210, then adds data representing the registration of the user authentication information thereto and transmits to the server 210 via the transmission/reception portion 122b.

In the server 210, the transmission/reception portion 225 receives data from the mobile phone terminal B110b and the analysis portion 224 analyzes the data of the user authentication information. When the analysis portion 224 determines that the user authentication information is information to be registered in the server 210, the terminal status management portion 222 stores in the memory portion 221 the user authentication information such as the password, finger mark, voice pattern, iris of the user B100b as the data of the user B100b. When the storing of the user authentication information is completed, the terminal status management portion 222 transmits notification data to the mobile phone terminal B110b via the analysis portion 224 and the transmission/reception portion 225 to notify the completion of the registration to the mobile phone terminal B110b.

Then, the procedure of the authentication information registration processing will be explained with reference to Fig. 5. In the mobile phone terminal B110b, first, the terminal control portion 123b performs a start processing 130b in which the user authentication input portion 124b obtains the user authentication information such as the password, finger mark, voice pattern, iris of the user B100b. Then, the terminal control portion 123b executes a user authentication information transmission processing 131 b in which the transmission/reception portion 122b performs the transmission processing 133b of the user authentication information

In the server 210, the analysis portion 224 analyzes the user authentication information obtained at the transmission/reception portion 225 to determine that the obtained information is the authentication information to be registered in the server 210 and the terminal status management portion 222 executes a user authentication information registering processing 231 in which the user authentication information is registered. Then, after the completion of the registering processing, the terminal status management portion 222 transmits notifying data to the mobile phone terminal B110b from the transmission/reception portion 225 to perform a completion notification 233. Then, in the mobile phone terminal B110b, the terminal control portion 123b performs a stop processing 132b to complete the registering processing of the user authentication information.

In this manner, the memory portion 221 of the server 210 stores the user authentication information such as biometric information of plural users and can update these information of plural users in a time division manner.

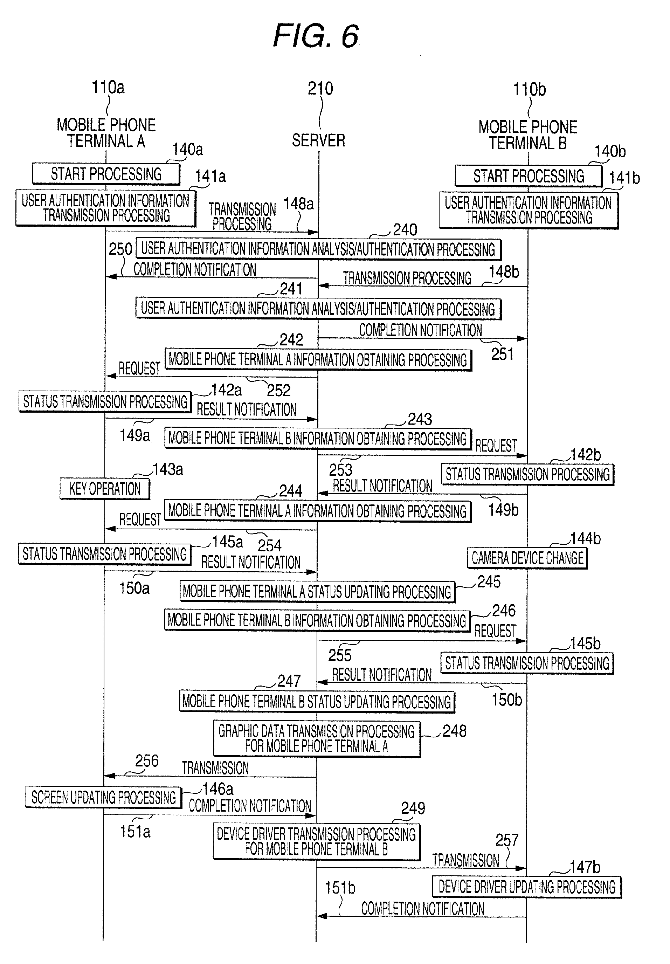

Fig. 6 is a sequence diagram showing the updating of a display screen and the updating processing of a disc driver in the communication control management system according to the second embodiment. In Fig. 6, like Fig. 5, each of the mobile phone terminals A110a, B110b is coupled to the server 210 via a communication interface using the radio wave or a wire. Fig. 6 shows the procedure in the case where the server 210 authenticates the user authentication information of the mobile phone terminal A110a and then the display screen (graphic data) such as a menu screen of the mobile phone terminal A110a is downloaded from the server 210 via the key operation of the mobile phone terminal A110a to update the display screen and the case where the server 210 authenticates the user authentication information of the mobile phone terminal B110b and then the device driver of the camera device of the mobile phone terminal B110b is downloaded from the server 210 in accordance with the change of the camera device of the mobile phone terminal B110b to update the device driver.

### (2) Use of mobile phone terminal (updating of display screen)

The explanation will be made as to the processing in which the sever 210 specifies the corresponding mobile phone terminal A110a from the user authentication information of the mobile phone terminal A110a possessed and used by the user A100a in Fig. 4, and the display screen of the display portion 121 a of the mobile phone terminal A110a is updated based on the key operation 143a of the mobile phone terminal A110a.

At the time of the starting etc. of the mobile phone terminal A110a, when the user A100a inputs a plurality of user authentication information such as the password, finger mark, voice pattern, iris of the user A100a by using the camera 120a and the key 125a, the user authentication input portion 124a obtains these user authentication information. The terminal control portion 123a determines that the obtained user information is the user authentication information to be registered in the server 210, then adds data representing the registration of the user authentication information and data of terminal identification information peculiar to the mobile phone terminal A110a thereto and transmits the user authentication information and the terminal identification information to the server 210 via the transmission/reception portion 122a.

In the server 210, the transmission/reception portion 225 receives data from the mobile phone terminal A110a and the analysis portion 224 analyzes the data of the user authentication information. When the analysis portion 224 determines that the user authentication information is information for identifying a user, the comparison portion 223 determines whether or not the obtained user authentication information is the user authentication information of the user A100a by using the plurality of user authentication information stored in the memory portion 221. In this case, the user A100a is specified for the first time when the plurality of user authentication information coincide. Simultaneously, the terminal status management portion 222 starts the status management of the mobile phone terminal A110a and stores in the memory portion 221 the terminal status information such as data representing that the terminal is in a starting state to perform the status management of the mobile phone terminal A110a. In this case, the terminal status management portion also manages the terminal status information relating to the display screen such as a menu screen representing what kind of screen is displayed at the mobile phone terminal A110a.

Then, the terminal status management portion 222 transmits notification data as to the specified result of a user to the mobile phone terminal A110a via the analysis portion 224 and the transmission/reception portion 225 thereby to perform a completion notification as to the mobile phone terminal A110a representing that the personal authentication is coincided. Further, the terminal status management portion 222 also transmits contract information such as a SIM card to the mobile phone terminal A110a simultaneously with this personal authentication completion notification. The specification of the contract information such as a SIM card is performed based on the user authentication information for the personal authentication like the specification of a user. Further, the notification of the personal authentication completion is made by specifying the terminal to be notified based on the terminal identification information.

In the server 210, the memory portion 221 stores data of the terminal operation information and the terminal status information, and the terminal status management portion 222 requests in a time division manner a plurality of user terminals which statuses are managed by the terminal status management portion 222 so as to transmit the statuses of the terminals. In the case of performing the terminal status transmission request, if the key 125a is operated at the mobile phone terminal A110a, for example, the terminal control portion 123a transmits the information representing which key is operated in which manner to the server 210 via the terminal control portion 123a and the transmission/reception portion 122a in response to the input of the key 125a. In this case, data presenting that the information is the terminal status information caused by the operation of the key 125a and the terminal identification information peculiar to the terminal are added and transmitted.

In response thereto, in the server 210, the transmission/reception portion 225 receives data from the mobile phone terminal A110a and the analysis portion 224 analyzes the received data to determine that the received data is the terminal status information of the key operation. Then, the terminal status management portion 222 obtains from the memory portion 221 the status of the mobile phone terminal A110a used by the user A100a based on the terminal identification information, and then selects and obtains display graphic data etc. such as a menu screen necessary in the next at the mobile phone terminal A110a from the received terminal status information. Then, the terminal status management portion 222 transmits the data such as the selected menu screen to the mobile phone terminal A110a via the analysis portion 224 and the transmission/reception portion 225.

In the mobile phone terminal A110a, the transmission/reception portion 122a receives the data transmitted from the server 210 and the terminal control portion 123a outputs the data to the display portion 121a to display on the screen. Thus, the updating processing of the display screen such as the menu screen is performed at the display portion 121 a.

Succeedingly, the procedure of the display screen updating processing will be explained with reference to Fig. 6. In the mobile phone terminal A110a, first, the terminal control portion 123a performs a start processing 140a in which the user authentication input portion 124a obtains the user authentication information such as the password, finger mark, voice pattern, iris of the user A100a. Then, the terminal control portion 123a executes a user authentication information transmission processing 141 a in which the transmission/reception portion 122a performs the transmission processing 148a of the user authentication information

The server 210 executes a user authentication information analysis/authentication processing 240, in which the analysis portion 224 analyzes the user authentication information obtained at the transmission/reception portion 225 and the comparison portion 223 determines whether or not the obtained user authentication information coincides with the user authentication information stored in the memory portion 221. As a result of the authentication processing, when the authentication is completed normally or successful, the terminal status management portion 222 serves to transmits from the transmission/reception portion 225 to the mobile phone terminal A110a notification data representing that the personal authentication coincides thereby to perform a completion notification 250.

Further, the server 210 requests in a time division manner the plurality of user terminals which statuses are managed so as to transmit the statuses of the terminals. Thus, the terminal status management portion 222 performs a mobile phone terminal A information obtaining processing 242 also as to the mobile phone terminal A110a thereby to perform a request 252 of the terminal status information transmission as to the mobile phone terminal A110a. In response thereto, in the mobile phone terminal A110a, the terminal control portion 123a performs a status transmission processing 142a in which the transmission/reception portion 122a transmits the terminal status information representing the status of the own terminal to the server 210 thereby to perform a result notification 149a in response to the request 252. The server 210 performs a mobile phone terminal A status updating processing based on the data of the terminal status information obtained from the status transmission processing 142a of the mobile phone terminal A110a. However, in this case, since the status of the mobile phone terminal A110a is not updated yet, no processing is performed.

Upon the lapse of a constant time, the terminal status management portion 222 again performs a mobile phone terminal A information obtaining processing 244 as to the mobile phone terminal A110a thereby to perform a request 254 of the terminal status information transmission as to the mobile phone terminal A110a. In this case, it is supposed that a key operation 143a is made at the mobile phone terminal A110a before the request 254 of the information transmission. In the mobile phone terminal A110a, the terminal control portion 123a performs a status transmission processing 145a in which the transmission/reception portion 122a transmits to the server 210 the terminal status information representing the status of the own terminal by the key operation thereby to perform a result notification 150a as to the request 254. The server 210 performs a mobile phone terminal A status updating processing 245 based on the data of the terminal status information obtained from the status transmission processing 145a of the mobile phone terminal A110a. This updating processing is performed by rewriting the terminal status information and the terminal operation information as to the memory portion 221.

Then, the terminal status management portion 222 executes a graphic data transmission processing 248 for the mobile phone terminal A. In this case, based on the terminal status information such as the key operation transmitted from the mobile phone terminal A110a and the terminal operation information (screen information, communication status information etc.) of the mobile phone terminal A110a managed by the terminal status management portion 222, graphic data such as a menu screen necessary for the mobile phone terminal A110a possessed and used by the user A100a is selected and the transmission/reception portion 225 performs a transmission processing 256 for transmitting the graphic data of the display screen to the mobile phone terminal A110a.

In response thereto, in the mobile phone terminal A110a, the terminal control portion 123a and the display portion 121a perform a screen updating processing 146a based on the graphic data received from the server 210, and a result of the screen updating processing is transmitted to the server 210 thereby to perform a completion notification 151 a.

### (3) Use of mobile phone terminal (installation of device driver)

The explanation will be made as to the processing in which the sever 210 specifies the corresponding mobile phone terminal B110b from the user authentication information of the mobile phone terminal B110b possessed and used by the user B100b in Fig. 4, and the software of the device driver of the mobile phone terminal B110b is updated due to the change of the camera device of the mobile phone terminal B110b of the user B100b.

At the time of the starting etc. of the mobile phone terminal B110b, when the user B100b inputs a plurality of user authentication information such as the password, finger mark, voice pattern, iris of the user B100b by using the camera 120b and the key 125b, the user authentication input portion 124b obtains these user authentication information. The terminal control portion 123b determines that the obtained user information is the user authentication information to be registered in the server 210, then adds data representing the registration of the user authentication information and data of terminal identification information peculiar to the mobile phone terminal B110b thereto and transmits the user authentication information and the terminal identification information to the server 210 via the transmission/reception portion 122b.

In the server 210, the transmission/reception portion 225 receives data from the mobile phone terminal B110b and the analysis portion 224 analyzes the data of the user authentication information. When the analysis portion 224 determines that the user authentication information is information for identifying a user, the comparison portion 223 determines whether or not the obtained user authentication information is the user authentication information of the user B100b by using the plurality of user authentication information stored in the memory portion 221. In this case, the user B100b is specified for the first time when the plurality of user authentication information coincide. Simultaneously, the terminal status management portion 222 starts the status management of the mobile phone terminal B110b and stores in the memory portion 221 the terminal status information such as data representing that the terminal is in a starting state to perform the status management of the mobile phone terminal B110b. In this case, the terminal status management portion also manages the terminal status information relating to the mounted device such as the kind of a hardware mounted on the mobile phone terminal B110b and the information of the device driver installed in the terminal etc..

Then, the terminal status management portion 222 transmits notification data as to the specified result of a user to the mobile phone terminal B110b via the analysis portion 224 and the transmission/reception portion 225 thereby to perform a completion notification as to the mobile phone terminal B110b representing that the personal authentication is coincided. Further, the terminal status management portion 222 also transmits contract information such as a SIM card to the mobile phone terminal B110b simultaneously with this personal authentication completion notification. The specification of the contract information such as a SIM card is performed based on the user authentication information for the personal authentication like the specification of a user. Further, the notification of the personal authentication completion is made by specifying the terminal to be notified based on the terminal identification information.

In the server 210, the memory portion 221 stores data of the terminal operation information and the terminal status information, and the terminal status management portion 222 requests in a time division manner a plurality of user terminals which statuses are managed by the terminal status management portion 222 so as to transmit the statuses of the terminals. In the case of performing the terminal status transmission request, if the camera device of the camera 120b is changed at the mobile phone terminal B110b, for example, the terminal control portion 123b transmits the information relating to the change of the device to the server 210 via the transmission/reception portion 122b. In this case, data of the terminal status information representing the change of the cameral device and the terminal identification information peculiar to the terminal are added and transmitted.

In response thereto, in the server 210, the transmission/reception portion 225 receives data from the mobile phone terminal B110b and the analysis portion 224 analyzes the received data to determine that the received data is the terminal status information of the change of the camera device. Then, the terminal status management portion 222 obtains from the memory portion 221 the status of the mobile phone terminal B110b used by the user B100b based on the terminal identification information, and then selects and obtains a device driver necessary for the mobile phone terminal B110b from the received terminal status information. Then, the terminal status management portion 222 transmits the data of the selected device driver to the mobile phone terminal B110b via the analysis portion 224 and the transmission/reception portion 225.

In the mobile phone terminal B110b, the transmission/reception portion 122b receives the data transmitted from the server 210 and the terminal control portion 123b obtains the device driver thereby to rewrite the corresponding device driver by the obtained new one. Thus, the updating processing of the device driver of the camera 120b is performed.

Succeedingly, the procedure of the device driver updating processing will be explained with reference to Fig. 6. In the mobile phone terminal B110b, first, the terminal control portion 123b performs a start processing 140b in which the user authentication input portion 124b obtains the user authentication information such as the password, finger mark, voice pattern, iris of the user B100b. Then, the terminal control portion 123b executes a user authentication information transmission processing 141 b in which the transmission/reception portion 122b performs the transmission processing 148b of the user authentication information

The server 210 executes a user authentication information analysis/authentication processing 241, in which the analysis portion 224 analyzes the user authentication information obtained at the transmission/reception portion 225 and the comparison portion 223 determines whether or not the obtained user authentication information coincides with the user authentication information stored in the memory portion 221. As a result of the authentication processing, when the authentication is completed normally or successful, the terminal status management portion 222 serves to transmits from the transmission/reception portion 225 to the mobile phone terminal B110b notification data representing that the personal authentication coincides thereby to perform a completion notification 251.

Further, the server 210 requests in a time division manner the plurality of user terminals which statuses are managed so as to transmit the statuses of the terminals. Thus, the terminal status management portion 222 performs a mobile phone terminal B information obtaining processing 243 also as to the mobile phone terminal B110b thereby to perform a request 253 of the terminal status information transmission as to the mobile phone terminal B110b. In response thereto, in the mobile phone terminal B110b, the terminal control portion 123b performs a status transmission processing 142b in which the transmission/reception portion 122b transmits the terminal status information representing the status of the own terminal to the server 210 thereby to perform a result notification 149b in response to the request 253. The server 210 performs a mobile phone terminal B status updating processing based on the data of the terminal status information obtained from the status transmission processing 142b of the mobile phone terminal B110b. However, in this case, since the status of the mobile phone terminal B110b is not updated yet, no processing is performed.

Upon the lapse of a constant time, the terminal status management portion 222 again performs a mobile phone terminal B information obtaining processing 246 as to the mobile phone terminal B110b thereby to perform a request 255 of the terminal status information transmission as to the mobile phone terminal B110b. In this case, it is supposed that the change 144b of the camera device of the camera 120b is made at the mobile phone terminal B110b before the request 255 of the information transmission. In the mobile phone terminal B110b, the terminal control portion 123b performs a status transmission processing 145b in which the transmission/reception portion 122b transmits to the server 210 the terminal status information representing the status of the own terminal by the camera device change thereby to perform a result notification 150b as to the request 255. The server 210 performs a mobile phone terminal B status updating processing 247 based on the data of the terminal status information obtained from the status transmission processing 145b of the mobile phone terminal B110b. This updating processing is performed by rewriting the terminal status information and the terminal operation information as to the memory portion 221

Then, the terminal status management portion 222 executes a device driver transmission processing 249 for the mobile phone terminal B. In this case, based on the terminal status information relating to the change of the hardware such as the camera device change transmitted from the mobile phone terminal B110b and the terminal operation information (device driver having been installed, communication status information etc.) of the mobile phone terminal B110b managed by the terminal status management portion 222, the device driver necessary for the mobile phone terminal B110b possessed and used by the user B100b is selected and the transmission/reception portion 225 performs a transmission processing 257 for transmitting the device driver to the mobile phone terminal B110b.

In response thereto, in the mobile phone terminal B110b, the terminal control portion 123b perform a device driver updating processing 147b based on the device driver received from the server 210, and a result of the device driver updating processing is transmitted to the server 210 thereby to perform a completion notification 151 b.

In the aforesaid embodiment, the functions of the respective portions of each of the mobile phone terminals A110a, B110b and the server 210 can be realized basically in a manner that a computer executes a program to perform the processings of the aforesaid (1) registration of authentication information, (2) use of mobile phone terminal (updating of display screen) and (3) use of mobile phone terminal (installation of device driver).

In each of the aforesaid embodiments, since the server manages the user related information and the terminal operation information etc., a user is not required to store the user related information in the communication terminal such as a mobile phone terminal used by the user. Thus, even if the communication terminal is lost or left behind somewhere, it is possible to prevent such a matter that the user related information such as personal information is illegally used by another person and so the security can be improved.

Further, since the user related information and the terminal operation information etc. are obtained by the communication terminal being used, a user can utilize the user related information and the terminal operation information stored in the memory portion of the server as they are so long as the communication terminal can mutually communicate with the server and further can utilize these information among a plurality of terminals. Thus, even in the case where the terminal is changed by another one, there does not arise such a procedure of shifting the personal information etc. from the current terminal to the another one. Further, since the user interface such as a menu screen can be commonly used among the plural terminals, the usability can be improved.

Further, when the control information of various kinds of communication terminals is registered in the server, it is possible to apply to such a usage that a part or the entirety of the communication terminal may be replaced by the function desired by a user.

The communication control management systems according to the respective embodiments explained above merely show examples of the invention and the configurations thereof can be changed suitably within a range of the gist of the invention. For example, although the explanation is made as to a mobile phone terminal as an example of the communication terminal, in place of the mobile phone terminal, a mobile device such as a PDA, a personal computer, a vehicle mounted terminal such as a car navigation device, a projection machine such as a projector, a wrist watch may be used.

The invention has effects that it is possible to prevent such a matter that the user related information such as personal information is illegally used by another person even in such a case that the communication terminal is lost, and the user related information and the terminal operation information etc. can be utilized among a plurality of terminals and so the security and the usability can be improved. Thus, the invention is usable in the system and method etc. for communication control management which stores and manages information used by a user in an environment in which communication is made mutually between a communication terminal and a server.

## Claims

1. A communication control management system comprising at least one communication terminal and a server which makes a communication mutually with the communication terminal, wherein the communication terminal includes:
a user authentication input portion which obtains user authentication information for performing user authentication; a terminal control portion which controls the communication terminal; a data transmission portion which transmits data from the user authentication input portion and the terminal control portion to the server; and a data receiving portion which receives data from the server and transmits the data to the terminal control portion,
the server includes:
a memory potion which stores the user authentication information, user related information relating to a user of the communication terminal and terminal operation information relating to an operation of the communication terminal; a data receiving portion which receives data from the communication terminal; a terminal status management portion which manages the status of the communication terminal used by the user; and a data transmission portion which transmits to the communication terminal at least one of the user related information of the user authenticated by the user authentication information and the terminal operation information of the corresponding communication terminal.

2. The communication control management system according to claim 1, wherein the terminal status management portion of the server requests the communication terminal to be managed and obtains terminal status information representing a status of the communication terminal.

3. The communication control management system according to claim 1, wherein the terminal status management portion of the server compares user authentication information received from the communication terminal with the compares user authentication information stored in the memory portion, then determines to be completion of authentication only when these information coincide to each other and reads and outputs at least one of the user related information and the terminal operation information.

4. The communication control management system according to claim 2, wherein the server further includes an analysis portion which analyzes data received from the communication terminal and extracts at least one of the user authentication information and the terminal status information.

5. The communication control management system according to claim 4, wherein when the data analyzed by the analysis portion is the terminal status information, the terminal status management portion of the server stores the data into the memory portion as the terminal status information representing a status of the corresponding communication terminal.

6. The communication control management system according to claim 1, wherein the memory portion of the server stores a plurality of the user authentication information, a plurality of the user related information and a plurality of the terminal operation information corresponding to a plurality of users, respectively, and further stores the terminal status information corresponding to the communication terminals used by a plurality of the users and updates the terminal status information in a time division manner.

7. The communication control management system according to claim 1, wherein the terminal status management portion of the server can manage a plurality of the communication terminals used by a single user, and when the same user makes a communication with the server from a plurality of the communication terminals thereby to perform the user authentication, the terminal status management portion transmits the same user related information and different terminal operation information to the plurality of the communication terminals.

8. The communication control management system according to claim 7, wherein when the user authentication information is received from a plurality of the communication terminals, the terminal status management portion of the server inquires, at a time of the user authentication as to a second or succeeding communication terminal, the second or succeeding communication terminal as to whether or not the authentication of the communication terminal having been successful in the user authentication is to be cancelled.

9. The communication control management system according to claim 7, wherein when the user authentication information is received from a plurality of the communication terminals and these user authentication information coincide to each other, the terminal status management portion of the server reads from the memory portion the terminal operation information corresponding to the communication terminal used lastly by the user and transmits the terminal operation information thus read to another communication terminal of the plurality of the communication terminals having been successful in the user authentication.

10. The communication control management system according to claim 1, wherein the memory portion of the server can store and register at least one user authentication information as the user authentication information.

11. The communication control management system according to claim 1, wherein when a plurality of the user authentication information coincide with the user authentication information corresponding to a single user, the terminal status management portion of the server authenticates the user.

12. The communication control management system according to claim 1, wherein the terminal status management portion of the server selects data including at least one of the user related information and the terminal operation information necessary for a corresponding user based on the terminal status information transmitted from the communication terminal and the terminal status information of the communication terminal stored in the memory portion and transmits the selected data to the communication terminal via the transmission portion.

13. The communication control management system according to claim 1, wherein the terminal status management portion of the server performs the user authentication based on the user authentication information transmitted from the communication terminal and the user authentication information stored in the memory portion and selects data including at least one of the user related information and the terminal operation information necessary for a corresponding user and transmits the selected data to the communication terminal via the transmission portion.

14. The communication control management system according to claim 1, wherein the communication terminal further includes an input portion which inputs terminal control from a user, and transmits the terminal status information based on the terminal control input to the server.

15. The communication control management system according to claim 1, wherein the communication terminal further includes an input portion which inputs terminal control from a user and an output portion which outputs based on the terminal operation information received from the server, when the communication terminal transmits the terminal status information based on the input from the user to the server,
the terminal status management portion of the server stores a current status of the communication terminal based on the transmitted terminal status information into the memory portion, then reads the terminal status information corresponding to the input from the memory portion and transmits the read terminal status information to the communication terminal.

16. The communication control management system according to claim 1, wherein the communication terminal further includes a memory portion which stores the user authentication information obtained by the user authentication input portion, and transmits data including the terminal status information representing a status of the communication terminal and the user authentication information to the server.

17. The communication control management system according to claim 1, wherein the communication terminal transmits data including the terminal identification information for identifying the communication terminal, the terminal status information representing a status of the communication terminal and the user authentication information to the server.

18. A communication terminal used in the communication control management system according to claim 1.

19. A server used in the communication control management system according to claim 1.

20. A communication control management method in a communication control management system comprising at least one communication terminal and a server which makes a communication mutually with the communication terminal, wherein
steps executed in the communication terminal includes:
a step of obtaining, at a user authentication input portion, user authentication information for performing user authentication; a step of obtaining, at a terminal control portion, terminal status information representing a status of the communication terminal; a step of transmitting, from a data transmission portion, data including the user authentication information and the terminal state information to the server; and a step of receiving the data from the server at a data receiving portion and transmitting the data to the terminal control portion, and wherein
steps executed in the server includes:
a step of holding in a memory potion the user authentication information, user related information relating to a user of the communication terminal and terminal operation information relating to an operation of the communication terminal; a step of receiving at a data receiving portion data from the communication terminal; a step of managing at a terminal status management portion the status of the communication terminal used by the user; and a step of transmitting from a data transmission portion to the communication terminal at least one of the user related information of the user authenticated by the user authentication information and the terminal operation information of the corresponding communication terminal.

21. A computer program embodied on a computer readable medium which, when executed by a computer, cause the computer to realizes functions of respective portions of the communication control management system according to claim 1.
